# EUROPEAN PATENT SPECIFICATION

(11) **EP 4 671 924 B1**
(45) Date of publication and mention of the grant of the patent: **02.12.2026**
(21) Application number: 24190761.7
(22) Date of filing: 24.07.2024
(51) Int. Cl.: G06F 3/01, G06F 3/023

(54) **HEAD-MOUNTED DISPLAY, CONTROL METHOD, AND NON-TRANSITORY COMPUTER READABLE STORAGE MEDIUM THEREOF**
KOPFMONTIERTE ANZEIGE, STEUERUNGSVERFAHREN UND NICHTTRANSITORISCHES COMPUTERLESBARES SPEICHERMEDIUM DAFÜR
VISIOCASQUE, PROCÉDÉ DE COMMANDE ET SUPPORT D'INFORMATIONS NON TRANSITOIRE LISIBLE PAR ORDINATEUR ASSOCIÉ

(30) Priority: 27.06.2024 US 202418757461
(43) Date of publication of application: 31.12.2025
(73) Proprietor: HTC Corporation, Taoyuan City 330, (TW)
(72) Inventor: LAI, Chao-Hsiang, 330 Taoyuan City (TW)
(74) Representative: Schmidbauer, Andreas Konrad

(56) References cited:
- US-A1- 2020 226 814
- US-A1- 2023 333 664
- US-A1- 20240 070 994
- US-A1- 20240 103 625
- US-B1- 11 221 680

## Description

### BACKGROUND

### Field of Invention

The present disclosure relates to a head-mounted display, control method, and non-transitory computer readable storage medium thereof. More particularly, the present disclosure relates to a head-mounted display, control method, and non-transitory computer readable storage medium thereof that combine image recognitions and inertial measurement parameters to generate control signals.

### Description of Related Art

In recent years, various technologies related to virtual reality have developed rapidly, and various technologies and applications of head-mounted displays have been proposed one after another.

Related prior art can be found in US 2023/333664 A1, US 2024/103625 A1, US 2024/070994 A1, US 2020/226814 A1, and US 11 221 680 B1.

In the existing technology, when a user wears a head-mounted display, the head-mounted display obtains data (e.g., input text) inputted by the user by detecting tap gestures of the user on a virtual keyboard or receives physical button pressing signals from a wearable apparatus worn by the user to obtain the data.

However, jittering and recognition bias caused by user's hand trembling or image recognition latency will lead to poor user experiences.

Additionally, with the popularity of smart phones, they have gradually become the most commonly used electronic products for people. In the meantime, the typing posture on smart phones has also become a human-computer interaction method that people familiar with.

In view of this, how to provide a more stable input method and reduce the difficulty of operating the head-mounted display according to the user's habit is the goal that the industry strives to work on.

### SUMMARY

In a first aspect of the present invention, there is provided a head-mounted display as set out in claim 1.

In a second aspect of the present invention, there is provided a control method as set out in claim 10.

In a third aspect of the present invention, there is provided a non-transitory computer readable storage medium as set out in claim 13.

The detailed technology and preferred embodiments implemented for the subject disclosure are described in the following paragraphs accompanying the appended drawings for people skilled in this field to well appreciate the features of the claimed invention.

### BRIEF DESCRIPTION OF THE DRAWINGS

The disclosure can be more fully understood by reading the following detailed description of the embodiment, with reference made to the accompanying drawings as follows:
Fig. 1 is a schematic diagram illustrating a control signal generating system according to a first embodiment of the present disclosure.
Fig. 2 is a schematic diagram illustrating a head-mounted display according to a first embodiment of the present disclosure.
Fig. 3 is a flow diagram illustrating the head-mounted display generating a control signal based on a gesture input according to some embodiments of the present disclosure.
Fig. 4 is a flow diagram illustrating generating hand posture based on a real-time image according to some embodiments of the present disclosure.
Fig. 5A is a schematic diagram illustrating the user wearing the wearable apparatus according to some embodiments of the present disclosure.
Fig. 5B is a schematic diagram illustrating a vertical extension area corresponding to a key according to some embodiments of the present disclosure.
Fig. 6 is a schematic diagram illustrating a flick gesture according to some embodiments of the present disclosure.
Fig. 7 is a schematic diagram illustrating the user operating a virtual keyboard according to some embodiments of the present disclosure.
Fig. 8 is a schematic diagram illustrating a control method according to a second embodiment of the present disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

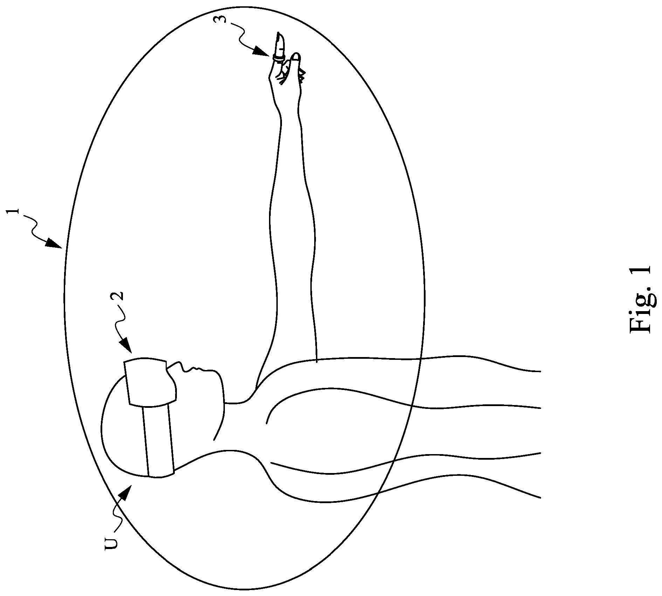

First, the applicable scene of the present embodiment will be described, and a schematic diagram of which is depicted in Fig. 1. As shown in Fig. 1, in the application environment of the present disclosure, a user U may use a head-mounted display 2, and the user U may wear a wearable device 3 on a body part (e.g., the user U wears a smart ring on the index finger of the left hand) to perform control operations (e.g., applications) corresponding to the display screen of the head-mounted display 2.

In the first embodiment of the present disclosure, the control signal generating system 1 comprises a head-mounted display 2 and a wearable device 3, and the head-mounted display 2 is communicatively connected to the wearable device 3. The control signal generating system 1 is configured to generate an input control signal based on an image and inertial measurement parameters of a hand of a user.

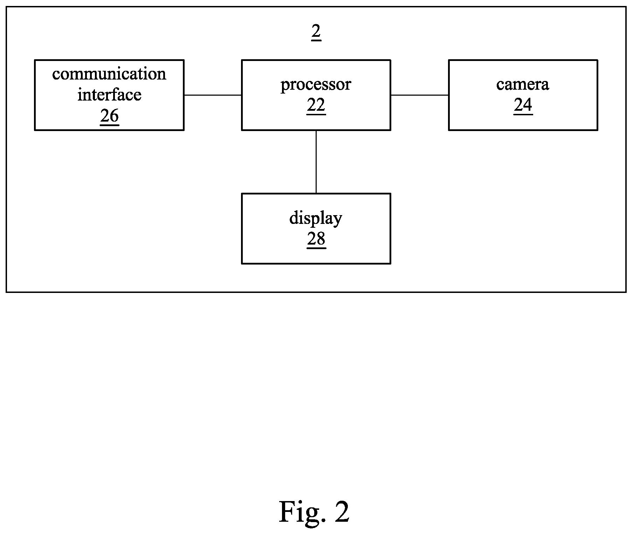

In the present embodiment, a schematic diagram of the structure of the head-mounted display 2 is depicted in Fig. 2. The head-mounted display 2 comprises a processor 22, a camera 24, a communication interface 26, and a display 28. The processor 22 is coupled to the camera 24, the communication interface 26, and the display 28.

In some embodiments, the camera 24 comprises one or more image capture unit (e.g., multiple depth camera lenses) configured to capture a real-time image comprising the wearable apparatus 3 worn on a hand of the user U.

In some embodiments, the camera 24 captures the real-time image corresponding to a field of view (FOV), and the hand of the user U wearing the wearable device 3 is included in the field of view.

The communication interface 26 is communicatively connected to the wearable apparatus 3 and receives inertial measurement parameters corresponding to the hand of the user U from the wearable apparatus 3.

The display 28 is configured to display images to provide the user U an interactive interface. In some embodiments, the display 28 displays virtual objects in a space to provide the user U to watch and interact with the virtual objects.

In some embodiments, the wearable apparatus 3 comprises an inertial measurement unit configured to measure inertial measurement parameters of the hand of the user U wearing the wearable device 3. Specifically, the inertial measurement unit may continuously generate a series of inertial measurement parameters (e.g., a stream of inertial measurement parameters generated at a frequency of 10 times per second), and each of the inertial measurement parameters may comprises an acceleration, an amount of rotation, and an angular acceleration. During operation, the head-mounted display 2 may periodically receive the inertial measurement parameters from the wearable device 3.

It shall be appreciated that the inertial measurement parameters generated by the wearable device 3 may correspond to the hand of the user U. For example, the user U may wear the wearable device 3 on any finger to collect data. For convenience of description, in the present embodiment, the user U may be described wearing the wearable device 3 on the index finger.

In some embodiments, the communication interface 26 is an interface capable of receiving and transmitting data or other interfaces capable of receiving and transmitting data and known to those of ordinary skill in the art. The communication interface can receive data from sources such as external apparatuses, external web pages, external applications, and so on.

In some embodiments, the processor 22 comprises a central processing unit (CPU), a graphics processing unit (GPU), a multi-processor, a distributed processing system, an application specific integrated circuit (ASIC), and/or a suitable processing unit.

It shall be appreciated that FIG. 1 is merely an example for illustration, and the present disclosure does not limit the content of the control signal generating system 1. For example, the present disclosure does not limit the number of wearable devices 3 connected to the head-mounted display 2. The head-mounted display 2 may be connected to a plurality of wearable devices through the network at the same time, depending on the scale and actual requirements of the control signal generating system 1.

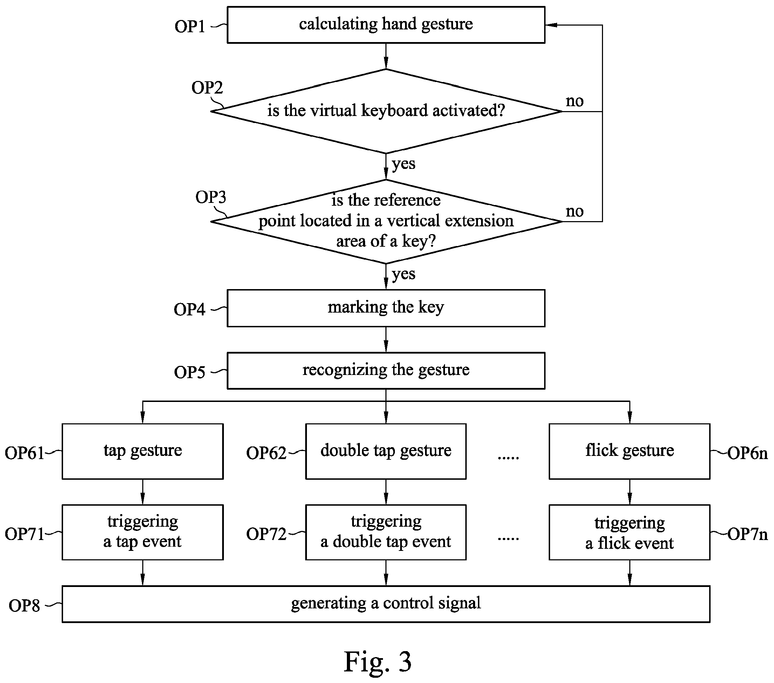

For details on how the head-mounted display 2 generates control signals, please refer to Fig. 3.

After the camera 24 obtains the real-time image, the processor 22 executes an operation OP1 and calculates a posture of the hand of the user U based on the real-time image. Specifically, the processor 22 calculates a posture corresponding to the hand based on the real-time image, wherein the posture comprises a reference point located on the hand.

In some embodiments, the operation of the processor 22 calculating the posture comprises: the processor 22 calculating a plurality of keypoints of the hand in the real-time image; and the processor 22 generating the posture of the hand in a three-dimensional space based on the keypoints and a depth information in the real-time image.

In some embodiments, the operation of the processor 22 selecting one of the keypoints as the reference point.

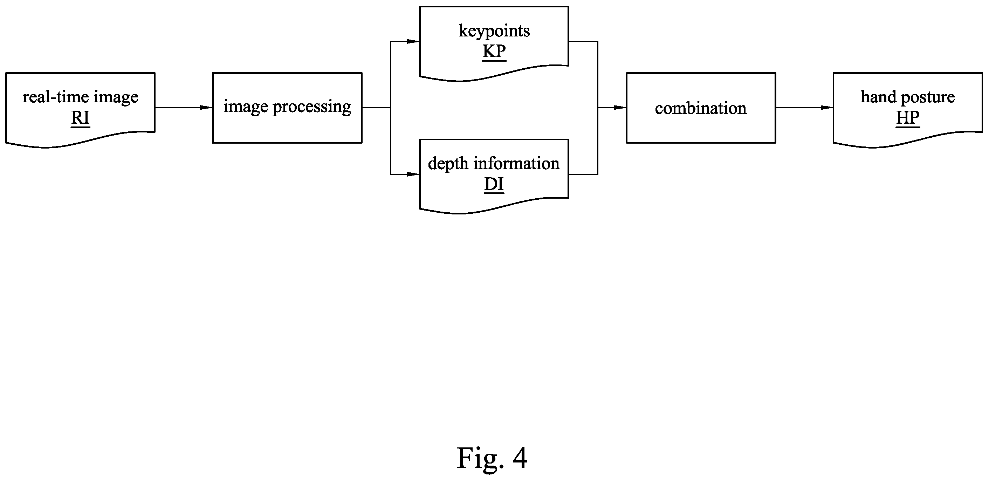

For details about calculating the hand posture, please refer to Fig. 4. As shown in the figure, after obtaining the real-time image RI captured by the camera 24, the processor 22 then performs image recognition on the real-time image RI to generate key points KP and depth information DI of the hand of the user U.

For example, the processor 22 recognizes multiple joint positions of the hand in the real-time image RI as the keypoints, e.g., the positions of the palm, fingers, knuckles, finger bases. On the other hand, when the camera 24 comprises a depth camera lens, the real-time image RI captured accordingly comprises depth information DI corresponding to each of the pixels. Furthermore, the processor 22 combines multiple keypoints calculated and the depth information DI in the real-time image RI to confirm the positions of the keypoints in a three-dimensional space. Accordingly, the processor 22 is able to obtain a hand posture HP of the user U in the three-dimensional space.

It is noted that, the reference point is selected from the key points KP by the head-mounted display 2 and also a datum point for confirming the target the user U is operating with. The function of the reference point is similar with a cursor of a personal computer or a tap position on a touch screen by the user.

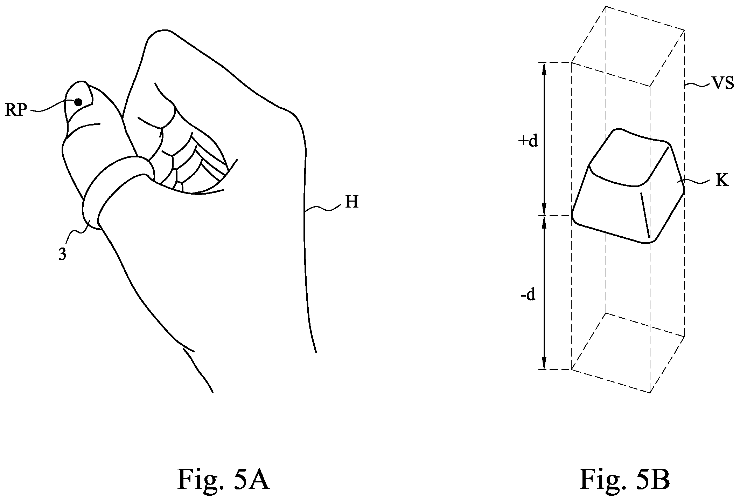

Please refer to Fig. 5A, in some embodiments, the head-mounted display 2 selects a index finger of a hand H of the user U wearing the wearable apparatus 3 as the reference point. As shown in the figure, the user U wears the wearable apparatus 3 on a thumb. Accordingly, the user U is able to operate the head-mounted display 2 by a posture of virtually holding the palm and tapping the side of the index finger by the thumb. This posture is similar to the operating posture of holding a smart phone by a palm and four fingers and tapping the screen of the phone by a thumb while operating the smart phone. Accordingly, the head-mounted display 2 is able to provide the user to input information in a familiar way. Additionally, since the thumb will face towards the head of the user U without being obscured while the hand of the user U making the gesture shown in Fig. 5A, the head-mounted display 2 is able to capture the real-time image of the reference point more easily.

In some embodiments, the virtual object is a virtual keyboard, the virtual keyboard comprises multiple keys, and the input target corresponds to one of the keys.

Please return to Fig. 3, after calculating the posture of the user U, the head-mounted display 2 executes an operation OP2 and determines whether the virtual keyboard is activated. If the virtual keyboard is activated, it represents that the head-mounted display 2 is in an input mode and further determines the input information based on the posture and gesture of the user U. On the contrary, if the virtual keyboard is not activated, it represents that the head-mounted display 2 is not in the input mode and returns to the operation OP1 to continue to determine the posture of the user U.

It is noted that, in the present embodiment, the operation OP2 takes the determination of whether the virtual keyboard is activated as an example. In other embodiments, the head-mounted display 2 may skip the operation or determine if it is needed to determine the information inputted by the user U through other operations, e.g., determining whether to activate a menu.

If it is determined that the virtual keyboard is activated, the head-mounted display 2 determines the function the user U wants to operate or the information inputted by the user U based on the hand position of the user U. Specifically, the processor 22 determines whether to activate an input operation based on the reference point and a relative position of a virtual object displayed by the display.

In the embodiment shown in Fig. 3, the head-mounted display 2 executes an operation OP3 first, determining whether the reference point RP is located in a vertical extension area of the virtual keyboard.

Specifically, the processor 22 determines whether the relative position of the reference point is located in a vertical extension area of the virtual object, wherein the vertical extension area is constituted by vertically extending a distance from a plurality of subobjects in the virtual object; and in response to the relative position of the reference point is located in the vertical extension area, the processor 22 determines to activate the input operation.

Please refer to Fig. 5B, which is a schematic diagram illustrating a vertical extension area VS corresponding to a key K according to some embodiments of the present disclosure. As shown in the figure, an area of distances d above and below the key K of the virtual keyboard constitutes the vertical extension area VS. Accordingly, the processor 22 determines whether the reference point RP on the hand of the user U is located in multiple vertical extension areas constituted by multiple keys on the virtual keyboard. If so, the processor 22 then determines that the user U may interact with the virtual keyboard, thus activating an input operation.

Additionally, the head-mounted display 2 also selects the input target of the user U based on the position of the reference point. For example, when the reference point RP is located in the vertical extension area VS of the key K, the processor 22 determines that the user U may interact with the key K, thus setting the key K as the input target.

Specifically, when the first gesture is a tap gesture, the input target is generated through the following operations: the processor 22 calculating a projection point of the reference point on a virtual plane corresponding to the virtual object; and the processor 22 selecting a first subobject from a plurality of subobjects corresponding to the virtual object as the input target based on the projection point.

For example, when the virtual object is a virtual keyboard, the processor 22 calculates a projected point position of the thumb of the user U (i.e., the reference point RP) on the plane constituted by the virtual keyboard and selects a corresponding key according to the projected point position located on the virtual keyboard.

It is noted that, for clarity, the virtual keyboard is taken as an example of the virtual object in the present disclosure. However, in other embodiments, the head-mounted display 2 may also take other objects as the virtual object (e.g., menu, dashboard).

When the reference point RP is located in the vertical extension area VS, it represents that the corresponding projected point is located on the key K, and the reference point RP is located at a distance of plus or minus d from the key K within the vertical extension area VS. Accordingly, the head-mounted display 2 determines that the user U may select the key K. On the contrary, if the reference point RP is not located in the vertical extension area VS, the head-mounted display 2 determines that the user U may select another key or does not interact with the virtual keyboard.

It is noted that, the head-mounted display 2 may apply the same method on multiple keys on the virtual keyboard to determine the key the user U may interacting with.

Please return to Fig. 3, if the reference point RP is not located in the vertical extension area VS, the head-mounted display 2 returns to the operation OP1 to continue to determine the posture of the user U.

On the other hand, if the reference point RP is located in the vertical extension area VS, the head-mounted display 2 executes an operation OP4 to marking a key corresponding to the reference point RP. Specifically, in response to determining to activate the input operation, the processor 22 marks one of the subobjects closest to the reference point.

In the embodiment shown in Fig. 5B, the processor 22 may mark the key K by making the key K glowing or coloring the key K in another color to provide the user U to confirm the key corresponding to the current hand posture. It is noted that, in some embodiments, the operation OP4 can be skipped optionally.

After activating the input operation, the head-mounted display 2 executes an operation OP5 to recognize the gesture of the user U based on the inertial measurement parameters transmitted by the wearable apparatus 3. Specifically, in response to determining to activate the input operation, the processor 22 selects a first gesture corresponding to the reference point from a plurality of gestures based on a plurality of inertial measurement parameters received from the wearable apparatus.

In some embodiments, the processor 22 inputs the inertial measurement parameters into a classification model to select the first gesture from the gestures. Specifically, the classification model is a trained machine learning model configured to classify the hand gesture of the user U into one of multiple known gestures based on the inertial measurement parameters. Furthermore, the input event comprises a tap event, a double event, and a flick event.

In some embodiments, the head-mounted display 2 captures the inertial measurement parameters generated in a time interval (e.g., 50 milliseconds) after activating the input operation to determine the gesture of the user U. Specifically, in response to determining to activate the input operation, the processor 22 receives the inertial measurement parameters captured in a time interval after activating the input operation from the wearable apparatus 3.

After recognizing the gesture of the user U, the head-mounted display 2 triggers the corresponding event based on the gesture and the key the user U interacting with. As shown in Fig. 3, the processor 22 may recognize n gestures such as the tap gesture, the double gesture, and the flick gesture (corresponding to operation OP61-OP6n respectively), wherein n is a positive integer.

Furthermore, the head-mounted display 2 triggers the event corresponding to the gesture of the user U and generates the corresponding control signal. Specifically, the processor 22 generate an input event corresponding to the virtual object based on the first gesture and an input target corresponding to the input operation.

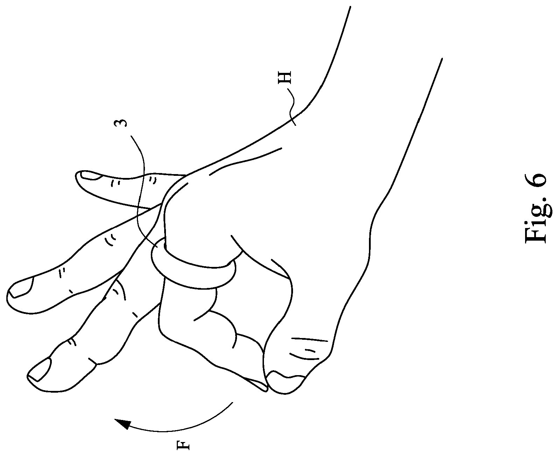

Through the aforementioned operation, the user U may trigger different functions by different hand movements. Take Fig. 5A as an example, the user U may trigger the tap event through the gesture of tapping the side of the index finger once by the thumb (i.e., the tap gesture) and trigger the double tap event through the gesture of tapping the side of the index finger twice by the thumb (i.e., the double tap gesture). Take Fig. 6 as an example, the user U may also trigger the flick event through the gesture of pinching the index finger and the thumb and then flicking the thumb in a direction F (i.e., the flick gesture).

In an embodiment, when the user U making the tap gesture is recognized (i.e., the operation OP61), the head-mounted display 2 executes an operation OP71 to trigger the tap event.

The processor 22 first confirms the subobject (e.g., the key K) the user U interacting with through the aforementioned operation of selecting the input target and then executes an operation OP8 to generate a control signal of tapping the key K (e.g., typing input).

In another example, at least one edge position of the virtual object comprises a virtual label, and when the first gesture is a double tap gesture, the operation of generating the input event corresponding to the virtual object further comprises: the processor 22 determining whether the reference point is located on a space position of the virtual label; and in response to the reference point is located on the space position of the virtual label, the processor 22 generating the input event corresponding to the virtual object based on a displacement distance of the double tap gesture.

In some embodiments, the input event comprises a zooming operation and a virtual object dragging operation.

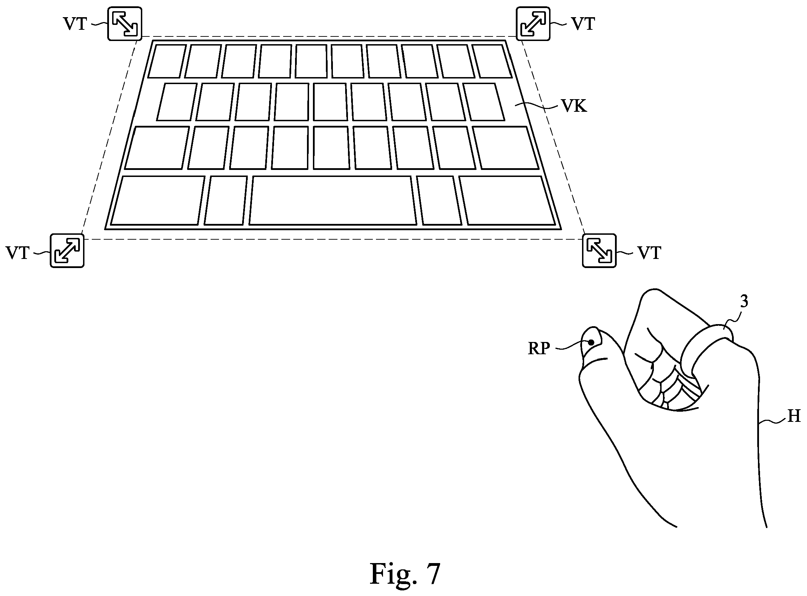

For example, please refer to Fig. 7, when the user U making the double tap gesture is recognized (i.e., the operation OP62), and the user U is determined to interact with a virtual tag VT of the virtual keyboard (i.e., the reference point RP is located in the vertical extension area of the virtual tag VT), the head-mounted display 2 executes an operation OP71 to trigger the double tap event and further executes the operation OP8 to generate a control signal of double tapping the virtual tag VT. Accordingly, the head-mounted display 2 adjusts the size and/or the position of the virtual keyboard VK along with the moving position of the hand of the user U.

In the other example, when the first gesture is a flick gesture, the operation of generating the input event corresponding to the virtual object further comprises: the processor 22 moving the virtual object to an initial position; and the processor 22 adjusting a size of the virtual object.

For example, when the user U making the flick gesture is recognized (i.e., the operation OP6n), the head-mounted display 2 executes an operation OP7n to trigger the flick event and further executes the operation OP8 to generate a control signal of flick gesture (e.g., resetting the virtual keyboard VK). Accordingly, the head-mounted display 2 resets the virtual keyboard VK to a preset size and/or a preset position.

It is noted that, the types, the number, or the corresponding function of the gestures in the present embodiment are only for ease of illustrating, and the head-mounted display 2 may set one or more gesture corresponding to one or more function in practical application. Additionally, when the same gesture corresponding to different interacting areas (e.g., different keys on the virtual keyboard), the head-mounted display 2 will also trigger different events to generate different control signals (e.g., input different characters while typing).

In summary, the control signal generating system 1 in the present disclosure determines the hand posture of the user based on the real-time image captured by the head-mounted display 2 and determines the hand gesture of the user based on the inertial measurement parameters obtained by the wearable apparatus 3. The control signal generating system 1 is able to solve the problem of low accuracy of image recognition for subtle hand movements and the difficulty of locating the hand in three-dimensional space by only the inertial measurement parameters. By combining two technologies, the control signal generating system 1 is able to determine the information inputted by the user more precisely while providing a friendlier and handier human-computer interaction experience.

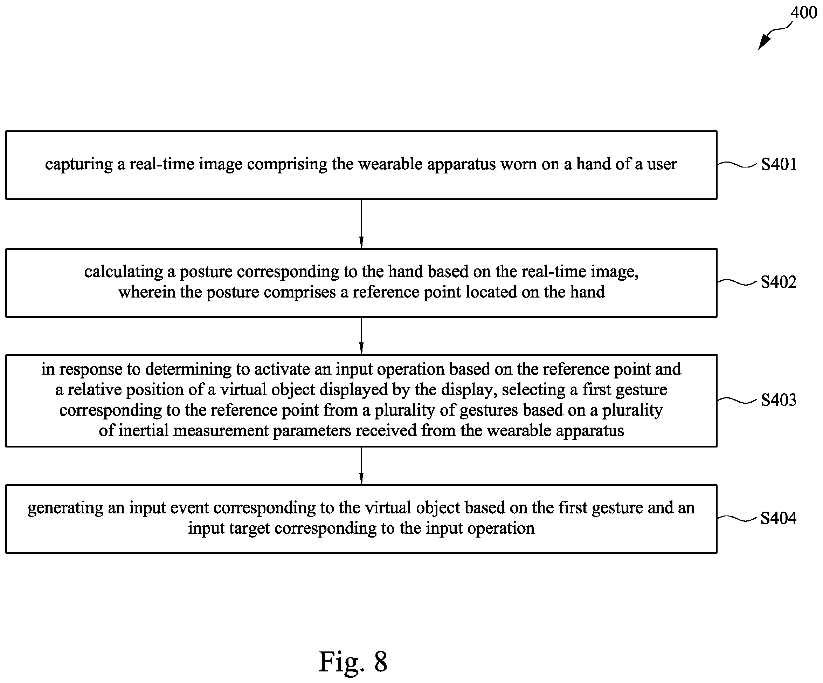

Please refer to Fig. 8, which is a schematic diagram illustrating a control method 400 according to a second embodiment of the present disclosure. The control method 400 comprises steps S401-S405. The control method 400 is configured to generate an input control signal based on an image and inertial measurement parameters of a hand of a user. The control method 400 can be executed by an electronic apparatus (e.g., the head-mounted display 2 in the first embodiment), wherein the electronic apparatus is communicatively connected to a wearable apparatus.

First, in the step S401, the electronic apparatus captures a real-time image comprising the wearable apparatus worn on a hand of a user.

Next, in the step S402, the electronic apparatus calculates a posture corresponding to the hand based on the real-time image, wherein the posture comprises a reference point located on the hand.

Next, in the step S403, in response to determining to activate an input operation based on the reference point and a relative position of a virtual object displayed by the display, the electronic apparatus selects a first gesture corresponding to the reference point from a plurality of gestures based on a plurality of inertial measurement parameters received from the wearable apparatus.

Finally, in the step S404, the electronic apparatus generates an input event corresponding to the virtual object based on the first gesture and an input target corresponding to the input operation.

In some embodiments, the step S402 further comprises the electronic apparatus calculating a plurality of keypoints of the hand in the real-time image; and the electronic apparatus generating the posture of the hand in a three-dimensional space based on the keypoints and a depth information in the real-time image.

In some embodiments, the step S402 further comprises the electronic apparatus selecting one of the keypoints as the reference point.

In some embodiments, the control method 400 further comprises the electronic apparatus determining whether the relative position of the reference point is located in a vertical extension area of the virtual object, wherein the vertical extension area is constituted by vertically extending a distance from a plurality of subobjects in the virtual object; and in response to the relative position of the reference point is located in the vertical extension area, the electronic apparatus determining to activate the input operation.

In some embodiments, when the first gesture is a tap gesture, the input target is generated through the following steps: calculating a projection point of the reference point on a virtual plane corresponding to the virtual object; and selecting a first subobject from a plurality of subobjects corresponding to the virtual object as the input target based on the projection point.

In some embodiments, at least one edge position of the virtual object comprises a virtual label, and when the first gesture is a double tap gesture, the step S405 further comprises: the electronic apparatus determining whether the reference point is located on a space position of the virtual label; and in response to the reference point is located on the space position of the virtual label, the electronic apparatus generating the input event corresponding to the virtual object based on a displacement distance of the double tap gesture.

In some embodiments, the input event comprises a zooming operation and a virtual object dragging operation.

In some embodiments, when the first gesture is a flick gesture, the step S405 further comprises: the electronic apparatus moving the virtual object to an initial position; and the electronic apparatus adjusting a size of the virtual object.

In some embodiments, the virtual object comprises a plurality of subobjects, and the control method 400 further comprises: in response to determining to activate the input operation, the electronic apparatus marking one of the subobjects closest to the reference point.

In some embodiments, the control method 400 further comprises: in response to determining to activate the input operation, the electronic apparatus receiving the inertial measurement parameters captured in a time interval after activating the input operation from the wearable apparatus.

In some embodiments, the step S405 further comprises: the electronic apparatus inputs the inertial measurement parameters into a classify model to select the first gesture from the gestures.

In some embodiments, the input event comprises a tap event, a double event, and a flick event.

In summary, the control method 400 in the present disclosure determines the hand posture of the user based on the real-time image captured by the electronic apparatus and determines the hand gesture of the user based on the inertial measurement parameters obtained by the wearable apparatus. The control method 400 is able to solve the problem of low accuracy of image recognition for subtle hand movements and the difficulty of locating the hand in three-dimensional space by only the inertial measurement parameters. By combining two technologies, the control method 400 is able to determine the information inputted by the user more precisely while providing a friendlier and handier human-computer interaction experience.

Although the present disclosure has been described in considerable detail with reference to certain embodiments thereof, other embodiments are possible. Therefore, the scope of the appended claims should not be limited to the description of the embodiments contained herein.

It will be apparent to those skilled in the art that various modifications and variations can be made to the structure of the present disclosure without departing from the scope of the claims. In view of the foregoing, it is intended that the present invention covers modifications and variations of this disclosure provided they fall within the scope of the following claims.

## Claims

1. A head-mounted display (2), comprising:
a display (28);
a communication interface (26), communicatively connected to a wearable apparatus (3);
a camera (24), configured to capture (S401) a real-time image comprising the wearable apparatus (3) worn on a hand of a user; and
a processor (22), coupled to the display (28), the communication interface (26), and the camera (24), configured to:
calculate (S402, OP1) a posture of the hand based on the real-time image, wherein the posture comprises a reference point (RP) located on the hand;
in response to determining to activate an input operation based on the reference point (RP) and a relative position of a virtual object displayed by the display (28), determine (S403, OP5) a first gesture corresponding to the reference point from a plurality of gestures based on a plurality of inertial measurement parameters received from the wearable apparatus (3); and
generate (S404, OP8) an input event corresponding to the virtual object based on the first gesture and an input target corresponding to the input operation, wherein the virtual object comprises a plurality of subobjects, wherein the input target corresponds to one of the plurality of subobjects,
**characterized in that** the processor (22) is further configured to:
determine (OP3) whether the relative position of the reference point is located in a vertical extension area (VS) of the virtual object, wherein the vertical extension area is constituted by vertically extending by a distance (d) from the plurality of subobjects in the virtual object; and
in response to the relative position of the reference point is located in the vertical extension area, determine to activate the input operation.

2. The head-mounted display (2) of claim 1, wherein the operation of calculating (S402) the posture comprises:
calculating a plurality of keypoints of the hand in the real-time image; and
calculating the posture of the hand in a three-dimensional space based on the keypoints and a depth information in the real-time image.

3. The head-mounted display (2) of claim 2, wherein the operation of calculating (S402) the posture further comprises:
selecting one of the keypoints as the reference point.

4. The head-mounted display (2) of claim 1, wherein when the first gesture is a tap gesture, the input target is selected through the following operations:
calculating a projection point of the reference point on a virtual plane corresponding to the virtual object; and
selecting a first subobject from the plurality of subobjects corresponding to the virtual object as the input target based on the projection point.

5. The head-mounted display (2) of claim 1, wherein at least one edge position of the virtual object comprises a virtual label, and when the first gesture is a double tap gesture, the operation of generating the input event corresponding to the virtual object further comprises:
determining whether the reference point is located on a space position of the virtual label; and
in response to the reference point is located on the space position of the virtual label, generating the input event corresponding to the virtual object based on a displacement distance of the double tap gesture.

6. The head-mounted display (2) of claim 5, wherein the input event comprises a zooming operation and a virtual object dragging operation.

7. The head-mounted display (2) of claim 1, wherein when the first gesture is a flick gesture, the operation of generating the input event corresponding to the virtual object further comprises:
moving the virtual object to an initial position; and
adjusting a size of the virtual object.

8. The head-mounted display (2) of claim 1, wherein the processor is further configured to:
in response to determining to activate the input operation, mark one of the subobjects closest to the reference point.

9. The head-mounted display (2) of claim 1, wherein the processor (24) is further configured to:
in response to determining to activate the input operation, receive the inertial measurement parameters captured in a time interval after activating the input operation from the wearable apparatus.

10. A control method (400), being adapted for use in an electronic apparatus (2), wherein the electronic apparatus (2) is communicatively connected to a wearable apparatus (3), and the control method comprises the following steps:
capturing (S401) a real-time image comprising the wearable apparatus worn on a hand of a user;
calculating (S402, OP1) a posture of the hand based on the real-time image, wherein the posture comprises a reference point located on the hand;
in response to determining to activate an input operation based on the reference point and a relative position of a virtual object displayed by a display (28), determining (S403, OP5) a first gesture corresponding to the reference point from a plurality of gestures based on a plurality of inertial measurement parameters received from the wearable apparatus; and
generating (S404, OP8) an input event corresponding to the virtual object based on the first gesture and an input target corresponding to the input operation, wherein the virtual object comprises a plurality of subobjects, wherein the input target corresponds to one of the plurality of subobjects,
**characterized by** the method further comprising
determining (OP3) whether the relative position of the reference point is located in a vertical extension area (VS) of the virtual object, wherein the vertical extension area is constituted by vertically extending by a distance (d) from the plurality of subobjects in the virtual object; and
in response to the relative position of the reference point is located in the vertical extension area, determining to activate the input operation.

11. The control method (400) of claim 10, wherein the step of calculating (S402) the posture comprises:
calculating a plurality of keypoints of the hand in the real-time image; and
calculating (S402) the posture of the hand in a three-dimensional space based on the keypoints and a depth information in the real-time image.

12. The control method (400) of claim 11, wherein the step of calculating (S402) the posture further comprises:
selecting one of the keypoints as the reference point.

13. A non-transitory computer readable storage medium, having a computer program stored therein, wherein the computer program comprises a plurality of codes, the computer program executes a control method (400) after being loaded into an electronic apparatus, the control method comprises:
capturing a real-time image comprising a wearable apparatus (3) worn on a hand of a user;
calculating (S402, OP1) a posture of the hand based on the real-time image, wherein the posture comprises a reference point (RP) located on the hand:
in response to determining to activate an input operation based on the reference point and a relative position of a virtual object displayed by a display (28), determining (S403, OP5) a first gesture corresponding to the reference point from a plurality of gestures based on a plurality of inertial measurement parameters received from the wearable apparatus; and
generating (S404, OP8) an input event corresponding to the virtual object based on the first gesture and an input target corresponding to the input operation, wherein the virtual object comprises a plurality of subobjects, wherein the input target corresponds to one of the plurality of subobjects,
**characterized by** the control method further comprising:
determining (OP3) whether the relative position of the reference point is located in a vertical extension area (VS) of the virtual object, wherein the vertical extension area is constituted by vertically extending by a distance (d) from a plurality of subobjects in the virtual object; and
in response to the relative position of the reference point is located in the vertical extension area, determining to activate the input operation.

## Patentansprüche

1. Eine am Kopf zu tragende Anzeigevorrichtung bzw. ein Head-Mounted-Display (2), umfassend:
eine Anzeigevorrichtung (28);
eine Kommunikationsschnittstelle (26), die mit einer tragbaren Vorrichtung (3) kommunikativ verbunden ist;
eine Kamera (24), die so konfiguriert ist, dass sie ein Echtzeitbild aufnimmt (S401), das die an einer Hand eines Benutzers getragene tragbare Vorrichtung (3) umfasst; und
einen Prozessor (22), der mit der Anzeigevorrichtung (28), der Kommunikationsschnittstelle (26) und der Kamera (24) gekoppelt ist und konfiguriert ist zum:
Berechnen (S402, OP1) einer Haltung der Hand auf der Grundlage des Echtzeitbildes, wobei die Haltung einen auf der Hand befindlichen Referenzpunkt (RP) umfasst;
Bestimmen (S403, OP5) einer dem Referenzpunkt entsprechenden ersten Geste aus einer Vielzahl von Gesten auf der Grundlage einer Vielzahl von Trägheitsmessparametern, die von der tragbaren Vorrichtung (3) empfangen wurden, als Reaktion auf die Feststellung, dass ein Eingabevorgang auf der Grundlage des Referenzpunkts (RP) und einer relativen Position eines von der Anzeigevorrichtung (28) angezeigten virtuellen Objekts aktiviert werden soll; und
Erzeugen (S404, OP8) eines Eingabevorgangs entsprechend dem virtuellen Objekt, basierend auf der ersten Geste und einem Eingabeziel entsprechend dem Eingabevorgang, wobei das virtuelle Objekt eine Vielzahl von Unterobjekten umfasst, wobei das Eingabeziel einem der Vielzahl von Unterobjekten entspricht,
**dadurch gekennzeichnet, dass** der Prozessor (22) ferner konfiguriert ist zum:
Ermitteln (OP3), ob sich die relative Position des Referenzpunkts in einem vertikalen Ausdehnungsbereich (VS) des virtuellen Objekts befindet, wobei der vertikale Ausdehnungsbereich durch eine vertikale Ausdehnung um einen Abstand (d) von den mehreren Teilobjekten im virtuellen Objekt gebildet wird; und
Bestimmen, dass der Eingabevorgang aktiviert wird, als Reaktion darauf, dass sich die relative Position des Referenzpunkts im vertikalen Ausdehnungsbereich befindet.

2. Die am Kopf zu tragende Anzeigevorrichtung (2) nach Anspruch 1, wobei der Vorgang des Berechnens (S402) der Haltung Folgendes umfasst:
Berechnen einer Vielzahl von Schlüsselpunkten der Hand im Echtzeitbild; und
Berechnen der Haltung der Hand in einem dreidimensionalen Raum auf der Grundlage der Schlüsselpunkte und einer Tiefeninformation im Echtzeitbild.

3. Die am Kopf zu tragende Anzeigevorrichtung (2) nach Anspruch 2, wobei der Vorgang des Berechnens (S402) der Haltung ferner umfasst:
Auswählen eines der Schlüsselpunkte als Referenzpunkt.

4. Die am Kopf zu tragende Anzeigevorrichtung (2) nach Anspruch 1, wobei, wenn die erste Geste eine Tippgeste ist, das Eingabeziel durch die folgenden Schritte ausgewählt wird:
Berechnen eines Projektionspunkts des Referenzpunkts auf einer dem virtuellen Objekt entsprechenden virtuellen Ebene; und
Auswählen eines ersten Teilobjekts aus der Vielzahl von Teilobjekten, die dem virtuellen Objekt entsprechen, als Eingabeziel auf der Grundlage des Projektionspunkts.

5. Die am Kopf zu tragende Anzeigevorrichtung (2) nach Anspruch 1, wobei mindestens eine Rand- bzw. Kantenposition des virtuellen Objekts eine virtuelle Beschriftung umfasst und, wenn die erste Geste eine Doppeltipp-Geste ist, der Vorgang des Erzeugens des dem virtuellen Objekt entsprechenden Eingabeereignisses ferner Folgendes umfasst:
Feststellen, ob sich der Referenzpunkt an einer räumlichen Position der virtuellen Beschriftung befindet; und
Erzeugen des dem virtuellen Objekt entsprechenden Eingabeereignisses auf der Grundlage einer Verschiebungsstrecke der Doppeltipp-Geste, als Reaktion darauf, dass sich der Referenzpunkt an der räumlichen Position der virtuellen Beschriftung befindet.

6. Die am Kopf zu tragende Anzeigevorrichtung (2) nach Anspruch 5, wobei das Eingabeereignis einen Zoomvorgang und einen Vorgang zum Ziehen eines virtuellen Objekts umfasst.

7. Die am Kopf zu tragende Anzeigevorrichtung (2) nach Anspruch 1, wobei, wenn es sich bei der ersten Geste um eine Schnipp- bzw. Wischgeste handelt, der Vorgang des Erzeugens des dem virtuellen Objekt entsprechenden Eingabeereignisses ferner Folgendes umfasst:
Verschieben des virtuellen Objekts an eine Ausgangsposition; und
Anpassen einer Größe des virtuellen Objekts.

8. Die am Kopf zu tragende Anzeigevorrichtung (2) nach Anspruch 1, wobei der Prozessor ferner konfiguriert ist zum:
Markieren eines der Unterobjekte, das dem Referenzpunkt am nächsten liegt, als Reaktion auf die Entscheidung, den Eingabevorgang zu aktivieren.

9. Die am Kopf zu tragende Anzeigevorrichtung (2) nach Anspruch 1, wobei der Prozessor (24) ferner konfiguriert ist zum:
Empfangen der Trägheitsmessparameter, die in einem Zeitintervall nach der Aktivierung des Eingabevorgangs erfasst wurden, von der tragbaren Vorrichtung, als Reaktion auf die Feststellung, den Eingabevorgang zu aktivieren.

10. Steuerungsverfahren (400), das zur Verwendung in einer elektronischen Vorrichtung (2) ausgelegt ist, wobei die elektronische Vorrichtung (2) kommunikativ mit einer tragbaren Vorrichtung (3) verbunden ist und das Steuerungsverfahren die folgenden Schritte umfasst:
Erfassen (S401) eines Echtzeitbildes, das die an einer Hand eines Benutzers getragene tragbare Vorrichtung umfasst;
Berechnen (S402, OP1) einer Haltung der Hand auf der Grundlage des Echtzeitbildes, wobei die Haltung einen auf der Hand befindlichen Referenzpunkt umfasst;
Bestimmen (S403, OP5) einer dem Referenzpunkt entsprechenden ersten Geste aus einer Vielzahl von Gesten auf der Grundlage einer Vielzahl von Trägheitsmessparametern, die von der tragbaren Vorrichtung empfangen wurden, als Reaktion auf die Feststellung, dass ein Eingabevorgang auf der Grundlage des Referenzpunkts und einer relativen Position eines auf einem Display (28) angezeigten virtuellen Objekts aktiviert werden soll; und
Erzeugen (S404, OP8) eines Eingabeereignisses, das dem virtuellen Objekt entspricht, basierend auf der ersten Geste und einem Eingabeziel, das dem Eingabevorgang entspricht, wobei das virtuelle Objekt eine Vielzahl von Unterobjekten umfasst, wobei das Eingabeziel einem der Vielzahl von Unterobjekten entspricht,
**dadurch gekennzeichnet, dass** das Verfahren ferner Folgendes umfasst:
Ermitteln (OP3), ob sich die relative Position des Referenzpunkts in einem vertikalen Ausdehnungsbereich (VS) des virtuellen Objekts befindet, wobei der vertikale Ausdehnungsbereich durch eine vertikale Ausdehnung um einen Abstand (d) von den mehreren Teilobjekten im virtuellen Objekt gebildet wird; und
Bestimmen, den Eingabevorgang zu aktivieren, als Reaktion darauf, dass sich die relative Position des Referenzpunkts im vertikalen Ausdehnungsbereich befindet.

11. Steuerungsverfahren (400) nach Anspruch 10, wobei der Schritt des Berechnens (S402) der Haltung Folgendes umfasst:
Berechnen einer Vielzahl von Schlüsselpunkten der Hand im Echtzeitbild; und
Berechnen (S402) der Haltung der Hand in einem dreidimensionalen Raum auf der Grundlage der Schlüsselpunkte und einer Tiefeninformation im Echtzeitbild.

12. Steuerungsverfahren (400) nach Anspruch 11, wobei der Schritt des Berechnens (S402) der Haltung ferner umfasst:
Auswählen eines der Schlüsselpunkte als Referenzpunkt.

13. Ein nichtflüchtiges, computerlesbares Speichermedium, auf dem ein Computerprogramm gespeichert ist, wobei das Computerprogramm eine Vielzahl von Codes umfasst, das Computerprogramm nach dem Laden in eine elektronische Vorrichtung ein Steuerungsverfahren (400) ausführt und das Steuerungsverfahren umfasst:
Erfassen eines Echtzeitbildes, das eine an einer Hand eines Benutzers getragene tragbare Vorrichtung (3) umfasst;
Berechnen (S402, OP1) einer Haltung der Hand auf der Grundlage des Echtzeitbildes, wobei die Haltung einen auf der Hand befindlichen Referenzpunkt (RP) umfasst;
Bestimmen (S403, OP5) einer ersten Geste, die dem Referenzpunkt entspricht, aus einer Vielzahl von Gesten auf der Grundlage einer Vielzahl von Trägheitsmessparametern, die von der tragbaren Vorrichtung empfangen wurden; als Reaktion auf die Entscheidung, einen Eingabevorgang auf der Grundlage des Referenzpunkts und einer relativen Position eines auf einem Display (28) angezeigten virtuellen Objekts zu aktivieren; und
Erzeugen (404, OP8) eines Eingabeereignisses, das dem virtuellen Objekt entspricht, basierend auf der ersten Geste und einem Eingabeziel, das der Eingabevorgang entspricht, wobei das virtuelle Objekt eine Vielzahl von Unterobjekten umfasst, wobei das Eingabeziel einem der Vielzahl von Unterobjekten entspricht,
**dadurch gekennzeichnet, dass** das Steuerungsverfahren ferner umfasst:
Ermitteln (OP3), ob sich die relative Position des Referenzpunkts in einem vertikalen Ausdehnungsbereich (VS) des virtuellen Objekts befindet, wobei der vertikale Ausdehnungsbereich durch eine vertikale Ausdehnung um einen Abstand (d) von einer Vielzahl von Teilobjekten im virtuellen Objekt gebildet wird; und
Bestimmen, den Eingabevorgang zu aktivieren, als Reaktion darauf, dass sich die relative Position des Referenzpunkts im vertikalen Ausdehnungsbereich befindet.

## Revendications

1. Un casque de visualisation de réalité virtuelle (2), comprenant :
un écran (28) ;
une interface de communication (26), connectée de manière communicative à un appareil portable (3) ;
une caméra (24), configurée pour capturer (S401) une image en temps réel comprenant l'appareil portable (3) porté à la main d'un utilisateur ; et
un processeur (22), couplé à l'écran (28), à l'interface de communication (26) et à la caméra (24), configuré pour :
calculer (S402, OP1) une posture de la main sur la base de l'image en temps réel, la posture comprenant un point de référence (RP) situé sur la main ;
en réponse à la décision d'activer une opération d'entrée sur la base du point de référence (RP) et d'une position relative d'un objet virtuel affiché par l'écran (28), déterminer (S403, OP5) un premier geste correspondant au point de référence parmi une pluralité de gestes sur la base d'une pluralité de paramètres de mesure inertielle reçus de l'appareil portable (3) ; et
générer (S404, OP8) un événement d'entrée correspondant à l'objet virtuel sur la base du premier geste et d'une cible d'entrée correspondant à l'opération d'entrée, l'objet virtuel comprenant une pluralité de sous-objets, la cible d'entrée correspondant à l'un des sous-objets de ladite pluralité,
**caractérisé en ce que** le processeur (22) est en outre configuré pour :
déterminer (OP3) si la position relative du point de référence se situe dans une zone d'extension verticale (VS) de l'objet virtuel, ladite zone d'extension verticale étant constituée par une extension verticale sur une distance (d) à partir de la pluralité de sous-objets de l'objet virtuel ; et
en réponse au fait que la position relative du point de référence se trouve dans la zone d'extension verticale, déterminer d'activer l'opération de saisie.

2. Le casque de visualisation de réalité virtuelle (2) selon la revendication 1, dans lequel l'opération de calculer (S402) la posture comprend :
calculer une pluralité de points clés de la main dans l'image en temps réel ; et
calculer la posture de la main dans un espace tridimensionnel sur la base des points clés et d'une information de profondeur dans l'image en temps réel.

3. Le casque de visualisation de réalité virtuelle (2) selon la revendication 2, dans lequel l'opération de calculer (S402) la posture comprend en outre :
sélectionner un des points clés comme point de référence.

4. Le casque de visualisation de réalité virtuelle (2) selon la revendication 1, dans lequel, lorsque le premier geste est un geste de tapotement, la cible de saisie est sélectionnée par les opérations suivantes :
calculer un point de projection du point de référence sur un plan virtuel correspondant à l'objet virtuel ; et
sélectionner un premier sous-objet parmi la pluralité de sous-objets correspondant à l'objet virtuel en tant que cible de saisie sur la base du point de projection.

5. Le casque de visualisation de réalité virtuelle (2) selon la revendication 1, dans lequel au moins une position de bord de l'objet virtuel comprend une étiquette virtuelle, et lorsque le premier geste est un geste de double tapotement, l'opération consistant à générer l'événement d'entrée correspondant à l'objet virtuel comprend en outre :
déterminer si le point de référence est situé sur une position spatiale de l'étiquette virtuelle ; et
en réponse au fait que le point de référence se trouve sur la position spatiale de l'étiquette virtuelle, générer l'événement d'entrée correspondant à l'objet virtuel en fonction d'une distance de déplacement du geste de double tapotement.

6. Le casque de visualisation de réalité virtuelle (2) selon la revendication 5, dans lequel l'événement d'entrée comprend une opération de zoom et une opération de glissement d'objet virtuel.

7. Le casque de visualisation de réalité virtuelle (2) selon la revendication 1, dans lequel, lorsque le premier geste est un geste de balayage, l'opération consistant à générer l'événement d'entrée correspondant à l'objet virtuel comprend en outre :
déplacer l'objet virtuel vers une position initiale ; et
ajuster la taille de l'objet virtuel.

8. Le casque de visualisation de réalité virtuelle (2) selon la revendication 1, dans lequel le processeur est en outre configuré pour :
en réponse à la décision d'activer l'opération d'entrée, marquer l'un des sous-objets les plus proches du point de référence.

9. Casque de réalité virtuelle (2) selon la revendication 1, dans lequel le processeur (24) est en outre configuré pour :
en réponse à déterminer d'activer l'opération de saisie, recevoir de l'appareil portable les paramètres de mesure inertielle capturés au cours d'un intervalle de temps suivant l'activation de l'opération de saisie.

10. Procédé de commande (400), adapté pour être utilisé dans un appareil électronique (2), dans lequel l'appareil électronique (2) est connecté de manière communicative à un appareil portable (3), et le procédé de commande comprend les étapes suivantes :
capturer (S401) une image en temps réel comprenant l'appareil portable porté sur une main d'un utilisateur ;
calculer (S402, OP1) une posture de la main sur la base de l'image en temps réel, la posture comprenant un point de référence situé sur la main ;
en réponse à déterminer d'activer une opération de saisie sur la base du point de référence et d'une position relative d'un objet virtuel affiché par un écran (28), déterminer (S403, OP5) un premier geste correspondant au point de référence parmi une pluralité de gestes sur la base d'une pluralité de paramètres de mesure inertielle reçus de l'appareil portable ; et
générer (S404, OP8) un événement d'entrée correspondant à l'objet virtuel sur la base du premier geste et d'une cible d'entrée correspondant à l'opération d'entrée, l'objet virtuel comprenant une pluralité de sous-objets, la cible d'entrée correspondant à l'un des sous-objets de ladite pluralité,
**caractérisé en ce que** le procédé comprend en outre :
déterminer (OP3) si la position relative du point de référence se situe dans une zone d'extension verticale (VS) de l'objet virtuel, la zone d'extension verticale étant constituée par une extension verticale sur une distance (d) à partir de la pluralité de sous-objets dans l'objet virtuel ; et
en réponse au fait que la position relative du point de référence se trouve dans la zone d'extension verticale, déterminer d'activer l'opération de saisie.

11. Procédé de commande (400) selon la revendication 10, dans lequel l'étape consistant à calculer (S402) la posture comprend :
calculer une pluralité de points clés de la main dans l'image en temps réel ; et
calculer (S402) la posture de la main dans un espace tridimensionnel sur la base des points clés et d'une information de profondeur dans l'image en temps réel.

12. Procédé de commande (400) selon la revendication 11, dans lequel l'étape consistant à calculer (S402) la posture comprend en outre :
sélectionner un des points clés comme point de référence.

13. Support de stockage non éphémère lisible par ordinateur, sur lequel est stocké un programme informatique, dans lequel le programme informatique comprend une pluralité de codes, le programme informatique exécute un procédé de commande (400) après avoir été chargé dans un appareil électronique, le procédé de commande comprenant :
capturer une image en temps réel comprenant un appareil portable (3) porté sur une main d'un utilisateur ;
calculer (S402, OP1) une posture de la main sur la base de l'image en temps réel, la posture comprenant un point de référence (RP) situé sur la main ;
en réponse à déterminer d'activer une opération d'entrée sur la base du point de référence et d'une position relative d'un objet virtuel affiché par un écran (28), déterminer (S403, OP5) un premier geste correspondant au point de référence parmi une pluralité de gestes, sur la base d'une pluralité de paramètres de mesure inertielle reçus de l'appareil portable ; et
générer (404, OP8) un événement d'entrée correspondant à l'objet virtuel sur la base du premier geste et d'une cible d'entrée correspondant à l'opération d'entrée, dans lequel l'objet virtuel comprend une pluralité de sous-objets, et dans lequel la cible d'entrée correspond à l'un de la pluralité de sous-objets,
**caractérisé en ce que** le procédé de commande comprend en outre :
déterminer (OP3) si la position relative du point de référence se situe dans une zone d'extension verticale (VS) de l'objet virtuel, la zone d'extension verticale étant constituée par une extension verticale sur une distance (d) à partir d'une pluralité de sous-objets de l'objet virtuel ; et
en réponse au fait que la position relative du point de référence se trouve dans la zone d'extension verticale, déterminer d'activer l'opération de saisie.
